# EUROPÄISCHE PATENTSCHRIFT

(11) **EP 3 383 727 B1**
(45) Veröffentlichungstag und Bekanntmachung des Hinweises auf die Patenterteilung: **18.09.2019**
(21) Anmeldenummer: 16798430.1
(22) Anmeldetag: 09.11.2016
(51) Int. Cl.: G05D 1/00, G06K 9/00, B62D 15/02, B60W 30/18, G01C 21/30

(54) **VERFAHREN UND VORRICHTUNG ZUM AUTOMATISIERTEN FAHREN EINES KRAFTFAHRZEUGES**
METHOD AND DEVICE FOR THE AUTOMATED DRIVING OF A MOTOR VEHICLE
PROCÉDÉ ET DISPOSITIF DE CONDUITE AUTOMATISÉE D'UN VÉHICULE AUTOMOBILE

(30) Priorität: 02.12.2015 DE 102015224008
(43) Veröffentlichungstag der Anmeldung: 10.10.2018
(60) Teilanmeldung: 19188108.5
(73) Patentinhaber: Volkswagen Aktiengesellschaft, 38440 Wolfsburg (DE)
(72) Erfinder: RÖSSLER, Bernd, 38524 Sassenburg (DE); GROSSJOHANN, Simon, 38442 Wolfsburg (DE); HOMEIER, Kai, 30453 Hannover (DE)
(86) Internationale Anmeldenummer: PCT/EP2016/077130
(87) Internationale Veröffentlichungsnummer: WO 2017/092991

(56) Entgegenhaltungen:
- EP-A1- 2 253 936
- JP-A- 2012 118 027
- US-A1- 2010 228 420
- US-B1- 9 120 486

## Beschreibung

Verfahren und Vorrichtung zum automatisierten Fahren eines Kraftfahrzeuges Die Erfindung betrifft ein Verfahren und eine Vorrichtung zum automatisierten Fahren eines Kraftfahrzeuges.

Ein solches Verfahren bzw. eine solche Vorrichtung ist beispielsweise aus der US 2010/0228420 A1 bekannt. Dabei umfasst die Vorrichtung eine Kamera und eine Auswerteeinheit zur Auswertung der von der Kamera erfassten Daten. Mittels der Kamera werden dabei Fahrbahnmarkierungen erfasst und daraus Fahrstreifen ermittelt. Anhand der Eigenposition des Kraftfahrzeugs in Relation zum Fahrstreifen kann dann das Kraftfahrzeug durch automatische Lenkbefehle im Fahrstreifen zentriert werden oder auch ein automatisierter Fahrspurwechsel in einen benachbarten Fahrstreifen vorgenommen werden. Der nächstliegende Stand der Technik ist in der US2010/0228420 A1 zu sehen.

Aus der EP 2 253 936 A1 ist ein Verfahren zur Bestimmung der aktuellen Position eines Kraftfahrzeugs bekannt, wobei Fahrspuren erfasst werden, wobei an Verzweigungspunkten die Parallelität von Fahrspuren erfasst wird.

Der Erfindung liegt das technische Problem zugrunde, ein Verfahren zum automatisierten Fahren eines Kraftfahrzeugs zur Verfügung zu stellen, bei der die Gefahr von fehlerhaften Fahrspurwechseln reduziert wird. Ein weiteres technisches Problem ist die Schaffung einer Vorrichtung zum automatisierten Fahren.

Die Lösung des technischen Problems ergibt sich durch ein Verfahren mit den Merkmalen des Anspruchs 1 sowie eine Vorrichtung mit den Merkmalen des Anspruchs 7. Weitere vorteilhafte Ausgestaltungen der Erfindung ergeben sich aus den Unteransprüchen.

Das Verfahren zum automatisierten Fahren eines Kraftfahrzeugs erfolgt mittels mindestens einer Kamera und einer Auswerteinheit zur Auswertung der von der Kamera erfassten Daten, wobei mittels der Kamera Fahrbahnmarkierungen erfasst werden und daraus Fahrstreifen ermittelt werden. Dabei werden Änderungen der Fahrbahnmarkierungen, die zur Ermittlung eines neuen Fahrstreifens führen würden, über eine vorgegebene Entfernung beobachtet, wobei der neue Fahrstreifen nur übernommen wird, wenn die geänderte Fahrbahnmarkierung über die vorgegebene Entfernung erfasst wurde. Somit wird sichergestellt, dass ein neuer Fahrstreifen erst übernommen wird, wenn dieser lange genug erfasst wurde. Somit wird verhindert, dass beispielsweise kurzfristige Störungen der Kamera oder Beschädigungen der Fahrbahnmarkierungen nicht zu falschen Fahrstreifenerfassungen führen. Die Entfernung stellt dabei das Produkt von Fahrzeuggeschwindigkeit und Zeit dar, sodass die Übernahme bei größeren Geschwindigkeiten schneller erfolgt. Dabei sei angemerkt, dass die Änderung der erfassten Fahrbahnmarkierung beispielsweise darin bestehen kann, dass eine zuvor durchgezogene oder gestrichelte Fahrbahnmarkierung verschwunden ist oder eine durchgezogene Fahrbahnmarkierung zu einer gestrichelten Fahrbahnmarkierung wird oder umgekehrt. Weiter sei angemerkt, dass neben der Kamera noch weitere Sensoriken wie beispielsweise Radar- oder Lidarsensoriken vorhanden sein können. Des Weiteren kann auch eine digitale Straßenkarte vorhanden sein. Mittels des Verfahrens kann aber zuverlässig ein neuer Fahrstreifen ermittelt werden, auch wenn die anderen Sensoriken oder die digitale Straßenkarte ausfallen.

Dabei ist vorgesehen, dass die Entfernung für die Übernahme eines Fahrstreifens für einen linken und einen rechten Fahrstreifen unterschiedlich gewählt wird. Im Falle eines Rechtsverkehrs wird dabei die Entfernung für einen rechten Fahrstreifen größer als für den linken Fahrstreifen gewählt, da dort die Gefahr von Fehlerfassungen größer ist, was nachfolgend noch näher erläutert wird.

In einer Ausführungsform wird die Entfernung größer gewählt als die Länge eines temporären Fahrstreifens. Dabei wird unter einem temporären Fahrstreifen insbesondere eine Auf- und Abfahrt oder ein Autobahnkreuz verstanden. Bei diesen wird in einer bestimmten Entfernung von beispielsweise ca. 300 - 500 m ein temporärer Fahrstreifen (Verzögerungsstreifen) gebildet, auf den gewechselt werden muss, wenn das Kraftfahrzeug abfahren möchte. Da die Länge des temporären Fahrstreifens je nach Land unterschiedlich sein kann, ist die Entfernung entsprechend anzupassen (z.B. mittels GPS-Daten) oder entsprechend groß zu wählen, beispielsweise indem die Entfernung größer als die maximale Länge eines temporären Fahrstreifens gewählt wird. Hierdurch wird verhindert, dass bei einer automatisierten Fahrt aufgrund eines Rechtsfahrgebots das Kraftfahrzeug irrtümlich auf den temporären Fahrstreifen gewechselt wird und an einer nicht gewünschten Stelle abfährt.

Weiter kann vorgesehen sein, dass die Entfernung abhängig von der Art einer erfassten Fahrbahnmarkierung gewählt wird. Beispielsweise kann bei durchgezogenen Fahrbahnmarkierungen die Entfernung kleiner gewählt werden, da die Gefahr von Fehlerfassungen geringer ist. Weiter kann insbesondere bei dem linken Fahrstreifen vorgesehen sein, dass bei der zusätzlichen Erfassung von anderen Kraftfahrzeugen die Entfernung ebenfalls reduziert wird.

In einer weiteren Ausführungsform werden Änderungen der Fahrbahnmarkierungen, die zur Löschung eines Fahrstreifens führen würden, ebenfalls über eine vorgegeben Entfernung beobachtet, wobei der Fahrstreifen nur gelöscht wird, wenn die geänderte Fahrbahnmarkierung über die vorgegebene Entfernung erfasst wurde. Dabei kann die Entfernung gleich der Entfernung für einen neuen Fahrstreifen gewählt werden. Vorzugsweise wird die Entfernung für das Löschen eines Fahrstreifens jedoch kürzer gewählt.

In einer weiteren Ausführungsform wird die Entfernung für das Löschen abhängig von der Art der zuvor und/oder aktuell erfassten Fahrbahnmarkierung gewählt. Beispielsweise ist die Entfernung länger, wenn zuvor eine durchgezogene Fahrbahnmarkierung erfasst wurde.

In einer weiteren Ausführungsform bleiben bei einem Fahrstreifenwechsel des Kraftfahrzeugs zuvor ermittelte Fahrstreifen gespeichert. Somit ist es möglich, dass beispielsweise ein Kraftfahrzeug weiß, dass es sich auf einer dreispurigen Autobahn befindet, obwohl es nur die Fahrstreifen der benachbarten Fahrstreifen erfassen kann, wenn es von einer rechten Fahrspur auf eine ganz linke Fahrspur gewechselt ist.

Ein bevorzugtes Anwendungsfeld des Verfahrens ist ein automatisiertes Fahren mit Fahrspurwechseln auf einer Autobahn.

Hinsichtlich der Vorrichtung wird vollinhaltlich auf die vorangegangenen Ausführungen zum Verfahren Bezug genommen.

Die Erfindung wird nachfolgend anhand eines bevorzugten Ausführungsbeispiels näher erläutert. Die Figuren zeigen:
- Fig. 1: ein schematisches Blockschaltbild einer Vorrichtung zum automatisierten Fahren eines Kraftfahrzeugs und
- Fig. 2: eine schematische Darstellung einer Autobahnabfahrt.

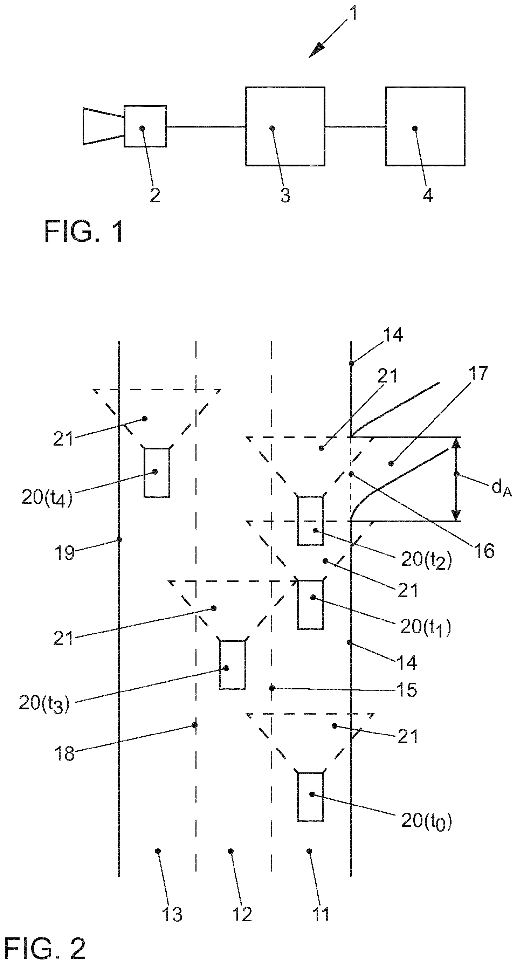

In der Fig. 1 ist schematisch ein Blockschaltbild einer Vorrichtung 1 zum automatisierten Fahren eines Kraftfahrzeugs dargestellt, die mindestens eine Kamera 2, eine Auswerteeinheit 3 und eine von der Auswerteeinheit 3 angesteuerte Aktorik 4 aufweist. Die mindestens eine Kamera 2 ist in Fahrtrichtung des Kraftfahrzeugs ausgerichtet und hat einen Erfassungsbereich, um mindestens Fahrbahnmarkierungen links und rechts vom Kraftfahrzeug zu erfassen. Diese erfassten Daten der Kamera 2 werden dann von der Auswerteeinheit 3 ausgewertet, um Fahrstreifen zu ermitteln. Dabei ist die Vorrichtung 1 derart ausgebildet, dass diese ihr Umfeld erlernt, d.h. die Vorrichtung 1 lernt selbständig aus den Daten der Kamera 2 neue Fahrstreifen an bzw. vergisst Fahrstreifen. Dabei ist die Auswerteeinheit 3 derart ausgebildet, dass Änderungen der Fahrbahnmarkierungen, die zur Ermittlung eines neuen Fahrstreifens führen würden, über eine vorgegebene Entfernung beobachtet werden, wobei der neue Fahrstreifen nur übernommen wird, wenn die geänderte Fahrbahnmarkierung über die vorgegebene Entfernung erfasst wurde. Diese vorgegebene Entfernung kann als d_{grenz1} bezeichnet werden.

Dies soll nun beispielhaft anhand von Fig. 2 näher erläutert werden. Dargestellt ist eine dreispurige Autobahn mit den drei Fahrstreifen 11, 12, 13. Ein Kraftfahrzeug 20 befindet sich zur Zeit t₀ auf der rechten Fahrspur 11. Die Kamera 2 der Vorrichtung 1 (siehe Fig. 1) erfasst die rechte durchgezogene Fahrbahnmarkierung 14 und die linke gestrichelte Fahrbahnmarkierung 15. Der Erfassungsbereich 21 der Kamera ist dabei gestrichelt dargestellt. Aus diesen Informationen kann die Auswerteeinheit 3 ableiten, dass mindestens zwei Fahrstreifen 11, 12 existieren, wobei der eigene Fahrstreifen 11 der rechte Fahrstreifen ist (wegen der durchgezogenen Linie). Wenn nun das Kraftfahrzeug 20 weiter auf dem Fahrstreifen 11 geradeaus fährt, so erfasst die Kamera 2 bzw. die Auswerteeinheit 3 zum Zeitpunkt t₁ eine Änderung der rechten Fahrbahnmarkierung 14 in eine gestrichelte Fahrbahnmarkierung 16. Die Vorrichtung 1 weiß nun noch nicht, ob es sich um einen permanenten neuen Fahrstreifen handelt oder aber um einen temporären Fahrstreifen (beispielsweise eine Autobahnabfahrt). Daher wird der neue Fahrstreifen 17 zunächst nicht übernommen. Vielmehr beobachtet die Auswerteeinheit 3 für die vorgegeben Entfernung d_{grenz1}, ob die gestrichelte Fahrbahnmarkierung 16 weiter erkannt wird. Zum Zeitpunkt t₂ hat das Kraftfahrzeug 20 eine Entfernung d_{A} kleiner als die vorgegebene Entfernung d_{grenz1} zurückgelegt und die Kamera 2 erfasst wieder die durchgezogene Fahrbahnmarkierung 14. Daher wird der neue Fahrstreifen 17 als temporärer Fahrstreifen klassifiziert und nicht übernommen.

Die vorgegebene Entfernung kann dabei abhängig von der erfassten Fahrbahnmarkierung sein, sodass beispielsweise für eine neu erfasste durchgezogene Fahrbahnmarkierung die vorgegebene Entfernung d_{grenz2} kleiner als d_{grenz1} ist.

Entsprechend kann auch das Vergessen eines Fahrstreifens (z.B. weil keine Fahrbahnmarkierung mehr erfasst wird), asymmetrisch sein, d.h. dass ein Fahrstreifen, der zuvor anhand einer durchgezogenen Fahrbahnmarkierung ermittelt wurde, länger erhalten bleibt als ein Fahrstreifen, der anhand einer gestrichelten Fahrbahnmarkierung ermittelt wurde.

Weiter ist die Auswerteeinheit 3 derart ausgebildet, dass ein erlerntes Umfeld nicht einfach vergessen wird, was anhand eines zweiten Szenarios erläutert werden soll. Das Kraftfahrzeug 20 befindet sich wieder zum Zeitpunkt t₀ auf dem rechten Fahrstreifen 11 und wechselt zum Zeitpunkt t₃ auf den mittleren Fahrstreifen 12. Die Kamera 2 erfasst nun rechts die gestrichelte Fahrbahnmarkierung 15 und links die gestrichelte Fahrbahnmarkierung 18. Somit weiß die Auswerteeinheit 3 zum Zeitpunkt t₃, dass es sich um eine dreispurige Autobahn handelt. Wechselt dann das Fahrzeug 20 zum Zeitpunkt t₄ auf den linken Fahrstreifen 13, so erfasst die Kamera 2 rechts die gestrichelte Fahrbahnmarkierung 18 und links die durchgezogene Fahrbahnmarkierung 19. Allein aus den Daten der Kamera 2 zum Zeitpunkt t₄ könnte nicht ermittelt werden, ob die Autobahn zwei- oder dreispurig ist (bzw. noch mehr Fahrstreifen aufweist). Anhand der Information zum Zeitpunkt t₃ hat sich aber die Auswerteeinheit 3 gemerkt, dass es sich um eine dreispurige Autobahn handelt. Dies kann dann bei der Trajektorienplanung berücksichtigt werden.

## Patentansprüche

1. Verfahren zum automatisierten Fahren eines Kraftfahrzeugs (20), mittels mindestens einer Kamera (2) und einer Auswerteeinheit (3) zur Auswertung der von der Kamera (2) erfassten Daten, wobei mittels der Kamera (2) Fahrbahnmarkierungen (14, 15, 16, 18, 19) erfasst werden und daraus Fahrstreifen (11, 12, 13) ermittelt werden,
**dadurch gekennzeichnet, dass**
Änderungen der Fahrbahnmarkierungen (14, 15, 16, 18, 19), die zur Ermittlung eines neuen Fahrstreifens (17) führen würden, über eine vorgegebene Entfernung (d_{grenz1}, d_{grenz2}) beobachtet werden, wobei der neue Fahrstreifen (17) nur übernommen wird, wenn die geänderte Fahrbahnmarkierung (14, 15, 16, 18, 19) über die vorgegebene Entfernung (d_{grenz1}, d_{grenz2}) erfasst wurde, wobei die Entfernung (d_{grenz1}, d_{grenz2}) für die Übernahme eines Fahrstreifens für einen linken und einen rechten Fahrstreifen unterschiedlich gewählt wird.

2. Verfahren nach Anspruch 1, **dadurch gekennzeichnet, dass** die Entfernung (d_{grenz1}, d_{grenz2}) größer gewählt wird als die Länge (d_{A}) eines temporären Fahrstreifens (17).

3. Verfahren nach einem der vorangegangenen Ansprüche, **dadurch gekennzeichnet, dass** die Entfernung (d_{grenz1}, d_{grenz2}) abhängig von der Art der erfassten Fahrbahnmarkierung (14, 15, 16, 18, 19) gewählt wird.

4. Verfahren nach einem der vorangegangenen Ansprüche, **dadurch gekennzeichnet, dass** Änderungen der Fahrbahnmarkeirungen (14, 15, 16, 18, 19), die zur Löschung eines Fahrstreifens (11, 12, 13) führen würden, über eine vorgegebene Entfernung beobachtet werden, wobei der Fahrstreifen nur gelöscht wird, wenn die geänderte Fahrbahnmarkierung (14, 15, 16, 18, 19) über die vorgegebene Entfernung erfasst wurde.

5. Verfahren nach Anspruch 4, **dadurch gekennzeichnet, dass** die Entfernung abhängig von der Art der zuvor und/oder aktuell erfassten Fahrbahnmarkierung (14, 15, 16, 18, 19) gewählt wird.

6. Verfahren nach einem der vorangegangenen Ansprüche, **dadurch gekennzeichnet, dass** bei einem Fahrstreifenwechsel des Kraftfahrzeugs zuvor ermittelte Fahrstreifen (11, 12, 13) gespeichert bleiben.

7. Vorrichtung (1) zum automatisierten Fahren eines Kraftfahrzeugs (20), umfassend mindestens eine Kamera (2) und eine Auswerteeinheit (3) zur Auswertung der von der Kamera (2) erfassten Daten, wobei die Kamera derart ausgebildet ist, dass mittels der Kamera (2) Fahrbahnmarkierungen (14, 15, 16, 18, 19) erfasst werden und die Auswerteeinheit (3) derart ausgebildet ist, dass aus den erfassten Daten der Kamera (2) Fahrstreifen (11, 12, 13) ermittelt werden,
**dadurch gekennzeichnet, dass**
die Auswerteinheit (3) derart ausgebildet ist, dass Änderungen der Fahrbahnmarkierungen (14, 15, 16, 18, 19) die zur Ermittlung eines neuen Fahrstreifens (17) führen würden, über eine vorgegebene Entfernung (d_{grenz1}, d_{grenz2}) beobachtet werden, wobei der neue Fahrstreifen (17) nur übernommen wird, wenn die geänderte Fahrbahnmarkierung (14, 15, 16, 18, 19) über die vorgegebene Entfernung (d_{grenz1}, d_{grenz2}) erfasst wurde, wobei die Auswerteeinheit (3) derart ausgebildet ist, dass die Entfernung (d_{grenz1}, d_{grenz2}) für die Übernahme eines Fahrstreifens für einen linken und einen rechten Fahrstreifen unterschiedlich gewählt wird.

8. Vorrichtung nach Anspruch 7 , **dadurch gekennzeichnet, dass** die Auswerteeinheit (3) derart ausgebildet ist, dass die Entfernung (d_{grenz1}, d_{grenz2}) größer gewählt wird als die Länge (d_{A}) eines temporären Fahrstreifens (17).

## Claims

1. A method for the automated driving of a motor vehicle (20), by means of at least one camera (2) and an evaluation unit (3) for evaluating the data captured by the camera (2), wherein by means of the camera (2) lane markings (14, 15, 16, 18, 19) are captured and traffic lanes (11, 12, 13) are determined therefrom,
**characterized in that**
changes in the lane markings (14, 15, 16, 18, 19), which would lead to determining a new traffic lane (17), are observed over a predefined distance (d_{grenz1}, d_{grenz2}), wherein the new traffic lane (17) is adopted only if the changed lane marking (14, 15, 16, 18, 19) has been captured over a predefined distance (d_{grenz1}, d_{grenz2}), wherein the distance (d_{grenz1}, d_{grenz2}) is selected differently for the adoption of a traffic lane for a left and a right traffic lane.

2. A method according to Claim 1, **characterized in that** the distance (d_{grenz1}, d_{grenz2}) is selected larger than the length (d_{A}) of a temporary traffic lane (17).

3. A method according to any one of the preceding claims, **characterized in that** the distance (d_{grenz1}, d_{grenz2}) is selected depending on the type of the captured lane marking (14, 15, 16, 18, 19).

4. A method according to any one of the preceding claims, **characterized in that** changes of the lane markings (14, 15, 16, 18, 19), which would lead to removal of a traffic lane (11, 12, 13), are observed over a predefined distance, wherein the traffic lane is only removed, if the changed lane marking (14, 15, 16, 18, 19) has been captured over the predefined distance.

5. A method according to Claim 4, **characterized in that** the distance is selected depending on the type of previously and/or currently captured lane marking (14, 15, 16, 18, 19).

6. A method according to any one of the preceding claims, **characterized in that** in the case of a lane change of the motor vehicle previously determined traffic lanes (11, 12, 13) remain stored.

7. A device (1) for the automated driving of a motor vehicle (20), comprising at least one camera (2) and an evaluation unit (3) for evaluating the data captured by the camera (2), wherein the camera is designed in such a manner that by means of the camera (2) lane markings (14, 15, 16, 18, 19) are captured and the evaluation unit (3) is designed in such a manner that traffic lanes (11, 12, 13) are determined from the captured data,
**characterized in that**
the evaluation unit (3) is designed in such a manner, that changes in the lane markings (14, 15, 16, 18, 19), which would lead to determining a new traffic lane (17), are observed over a predefined distance (d_{grenz1}, d_{grenz2}), wherein the new traffic lane (17) is adopted only if the changed lane marking (14, 15, 16, 18, 19) has been captured over a predefined distance (d_{grenz1}, d_{grenz2}), wherein the evaluation unit (3) is designed in such a manner that the distance (d_{grenz1}, d_{grenz2}) is selected differently for the adoption of a traffic lane for a left and a right traffic lane.

8. A device according to Claim 7, **characterized in that** the evaluation unit (3) is designed in such a manner that that the distance (d_{grenz1}, d_{grenz2}) is selected greater than the length (d_{A}) of a temporary traffic lane (17).

## Revendications

1. Procédé pour la conduite automatique d'un véhicule (20), au moyen d'au moins une caméra (2) et d'une unité d'analyse (3) pour l'analyse des données relevées par la caméra (2), des repères de trajectoire (14, 15, 16, 18, 19) étant relevés au moyen de caméra (2) et des voies de circulation (11, 12, 13) étant déterminées à partir de ceux-ci,
**caractérisé en ce que**
les modifications des repères de trajectoire (14, 15, 16, 18, 19), qui conduiraient à la détermination d'une nouvelle voie de circulation (17), sont observées sur une distance (d_{grenz1}, d_{grenz2}) prédéterminée, la nouvelle voie de circulation (17) n'étant prise en compte que lorsque le repère de trajectoire (14, 15, 16, 18, 19) modifié a été relevé sur la distance (d_{grenz1}, d_{grenz2}) prédéterminée, la distance (d_{grenz1}, d_{grenz2}) pour la prise en compte d'une voie de circulation étant choisie de manière différente pour une voie de circulation gauche et une voie de circulation droite.

2. Procédé selon la revendication 1, **caractérisé en ce que** la distance (d_{grenz1}, d_{grenz2}) est choisie de façon à être supérieure à la longueur (d_{A}) d'une voie de circulation temporaire (17).

3. Procédé selon l'une des revendications précédentes, **caractérisé en ce que** la distance (d_{grenz1}, d_{grenz2}) est choisie en fonction du type de repère de trajectoire (14, 15, 16, 18, 19) relevé.

4. Procédé selon l'une des revendications précédentes, **caractérisé en ce que** les modifications des repères de trajectoire (14, 15, 16, 18, 19) qui conduiraient à l'effacement d'une voie de circulation (11, 112, 13) sont surveillées sur une distance prédéterminée, la voie de circulation n'étant effacée que lorsque le repère de trajectoire (14, 15, 16, 18, 19) modifié a été relevé sur la distance prédéterminée.

5. Procédé selon la revendication 4, **caractérisé en ce que** la distance est choisie en fonction du type de repère de trajectoire (14, 15, 16, 18, 19) relevé auparavant et/ou actuellement.

6. Procédé selon l'une des revendications précédentes, **caractérisé en ce que**, lors d'un changement de voie de circulation du véhicule, les voies de circulation (11, 12, 13) auparavant déterminées restent enregistrées.

7. Dispositif (1) pour la conduite automatisée d'un véhicule (20), comprenant au moins une caméra (2) et une unité d'analyse (3) pour l'analyse des données relevées par la caméra (2), la caméra étant conçue de façon à ce que, au moyen de la caméra (2), des repères de trajectoire (14, 15, 16, 18, 19) soient relevés, t l'unité d'analyse (3) est conçue de façon à ce que, à partir des données relevées par la caméra (2), des voies de circulation (11, 12, 13) sont déterminées,
**caractérisé en ce que**
l'unité d'analyse (3) est conçue de façon à ce que les modifications des repères de trajectoire (14, 15, 16, 18, 19), qui conduiraient à la détermination d'une nouvelle voie de circulation (17), sont observées sur une distance (d_{grenz1}, d_{grenz2}) prédéterminée, la nouvelle voie de circulation (17) n'étant prise en compte que lorsque le repère de trajectoire (14, 15, 16, 18, 19) modifié a été relevé sur la distance (d_{grenz1}, d_{grenz2}) prédéterminée, l'unité d'analyse (3) étant conçue de façon à ce que la distance (d_{grenz1}, d_{grenz2}) pour la prise en compte d'une voie de circulation soit choisie de manière différente pour une voie de circulation gauche et une voie de circulation droite.

8. Dispositif selon la revendication 7, **caractérisé en ce que** l'unité d'analyse (3) soit conçue de façon à ce que la distance (d_{grenz1}, d_{grenz2}) soit choisie plus grande que la longueur (d_{A}) d'une voie de circulation temporaire (17).
